Europäisches Patentamt

European Patent Office

Office européen des brevets

(11) Veröffentlichungsnummer: **0 049 875**
A2

# (12) EUROPÄISCHE PATENTANMELDUNG

(21) Anmeldenummer: 81108095.1

(51) Int. Cl.³: **G 01 B 11/28**

(22) Anmeldetag: 09.10.81

(30) Priorität: 11.10.80 DE 3038437

(43) Veröffentlichungstag der Anmeldung:
21.04.82 Patentblatt 82/16

(84) Benannte Vertragsstaaten:
DE FR GB IT SE

(71) Anmelder: Licentia Patent-Verwaltungs-GmbH
Theodor-Stern-Kai 1
D-6000 Frankfurt/Main 70(DE)

(72) Erfinder: Wandel, Gernot, Dr. rer. nat.
Quälkampsweg 89
D-2000 Wedel/Holstein(DE)

(72) Erfinder: Green, Hartmut, Dipl.-Ing.
Rosentwiete 18
D-2082 Uetersen(DE)

(72) Erfinder: Manthey, Helmut, Dr.
Feldstrasse 74
D-2000 Wedel/Holstein(DE)

(74) Vertreter: Sass, Adolph, Dipl.-Ing. et al,
Licentia Patent-Verwaltungs-GmbH Theodor-Stern-Kai
1
D-6000 Frankfurt 70(DE)

(54) Verfahren zum Messen des Flächeninhaltes der Projektion eines durch eine unregelmässige Umrisslinie begrenzten undurchsichtigen dreidimensionalen Gegenstandes auf eine Ebene.

(57) Bei diesem Verfahren werden eine Lichtquelle (1) zum Beleuchten des Gegenstandes zwecks seiner Unterscheidung von seinem Hintergrund und ein Detektor, der den Gegenstand und seinen Hintergrund zeilenweise abtastet und das zu ihm gelangende Licht in ein elektrisches Signal umwandelt, verwendet. Ein Schattenriß eines Teiles des untersuchten Gegenstandes auf einer Mattscheibe (5) wird durch ein Parallelstrahlenbündel (4) erzeugt. Der gesamte Gegenstand wird durch eine Aneinanderreihung von Schattenrissen abgetastet. Jeder Schattenriß wird von einer elektronischen Kamera (6) ausgemessen. Das Verfahren ist für die Bestimmung des aerodynamischen Verhaltens eines Gegenstandes, beispielsweise eines Fahrzeuges, geeignet.

EP 0 049 875 A2

Licentia Patent-Verwaltungs-GmbH          Z13PTL-HH/S1/mar
Theodor-Stern-Kai 1                        HH 80/37
D-6000 Frankfurt/Main 70

"Verfahren zum Messen des Flächeninhaltes der Projektion eines
durch eine unregelmäßige Umrißlinie begrenzten undurchsichtigen
dreidimensionalen Gegenstandes auf eine Ebene"

Die Erfindung betrifft ein Verfahren zum Messen des Flächeninhaltes der Projektion eines durch eine unregelmässige Umrißlinie
begrenzten undurchsichtigen dreidimensionalen Gegenstandes auf
eine Ebene unter Verwendung einer Lichtquelle zum Beleuchten
des Gegenstandes zwecks seiner Unterscheidung von seinem Hintergrund und eines Detektors, der den Gegenstand und seinen Hintergrund zeilenweise abtastet und das zu ihm gelangende Licht in
ein elektrisches Signal umwandelt.

Für die Bestimmung des aerodynamischen Verhaltens eines Gegenstandes, beispielsweise eines Fahrzeuges, interessiert unter
anderem der Flächeninhalt der Projektion dieses Gegenstandes
in dessen Längsrichtung. Es ist eine Vorrichtung zum Messen
des Flächeninhaltes der Projektion eines durch eine unregelmässige Umrißlinie begrenzten undurchsichtigen Körpers auf eine
Ebene mit einer Lichtquelle zum Beleuchten des Körpers zwecks
einer Unterscheidung von seinem Hintergrund und mit einem
Detektor, der den Körper und seinen Hintergrund zeilenweise
abtastet, bekannt (DE-AS 21 34 450). Der Detektor wandelt das
zu ihm gelangende Licht in ein elektrisches Signal um, das
ein elektrisches Tor öffnet, durch das hindurch mit gleichem
zeitlichen Abstand aufeinanderfolgende Taktimpulse zu einem Zähler gelangen können, in dem die gezählten Taktimpulse
ein Maß für die das Licht der Lichtquelle beeinflussende
Fläche des Körpers liefern. Der als Fotoelement ausgebildete Detektor ist auf einem Schlitten längs eines von zwei
die lotrechten Seiten eines rechteckförmigen Gestells bildenden und synchron zueinander und schrittweise antreibbaren Gewindespindeln getragenen und parallel zu sich selbst
in vertikaler Richtung verschiebbaren Meßbalkens zwischen
zwei Endanschlägen mit elektrischen Endschaltern hin- und
herbewegbar. Die Endschalter wirken mit einem Umschalter
zusammen, der einerseits im Stromkreis eines Antriebsmotors
für eine Drehung der Gewindespindeln und andererseits im
Stromkreis eines Umkehrmotors für eine Bewegung des Schlittens entlang dem Meßbalken liegt und in seiner einen Schaltstellung eine gleichzeitige und gleichartige Drehung der
Gewindespindeln durch den Antriebsmotor und in seiner anderen Schaltstellung eine Verschiebung des Schlittens mit von
Schaltvorgang zu Schaltvorgang wechselnder Bewegungsrichtung
durch den Umkehrmotor auslöst. An einem dem Gestell für die
Halterung des Detektors und seine Bewegung relativ zum Körper
gleichenden Gestell ist als eine ein Schattenbild des Körpers
erzeugende Lichtquelle ein Laser vorgesehen, dessen Lichtstrahl jeweils senkrecht zur auszumessenden Projektionsfläche
für den Körper auf den Detektor gerichtet ist, mittels eines
Umkehrmotors und eines Antriebsmotors synchron zum Detektor
und unter Steuerung durch zwei Endschalter und einen Umschalter horizontal und vertikal verschiebbar geführt ist, die
in ihrer elektrischen Funktion den Endschaltern bzw. dem Umschalter am Gestell entsprechen.

Ein Nachteil dieser Vorrichtung ist in der verhältnismässig
langsamen Verarbeitungsgeschwindigkeit zu sehen. Hier will
die Erfindung Abhilfe schaffen.

Die Erfindung, wie sie in den Ansprüchen gekennzeichnet ist, löst die Aufgabe, ein Verfahren gemäß dem Oberbegriff von Anspruch 1 zu schaffen, das eine wesentliche Erhöhung der Meßgeschwindigkeit mit sich bringt. Das erfindungsgemäße Verfahren bringt neben einer hohen Meßgeschwindigkeit vorteilhafterweise eine verhältnismässig hohe Genauigkeit mit sich.

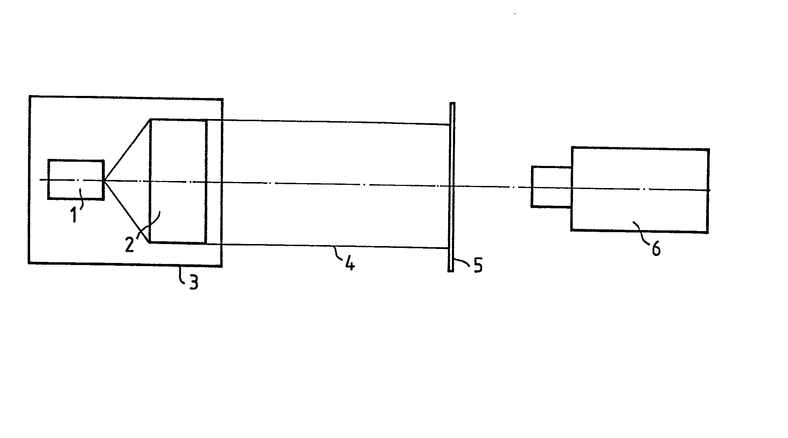

In der Zeichnung ist ein Ausführungsbeispiel einer das erfindungsgemäße Verfahren ermöglichenden Vorrichtung im Prinzip dargestellt. Bei dieser Vorrichtung ist eine Lichtquelle 1 mit einer optischen Einrichtung 2 zu einer mechanischen Einheit 3 zur Erzeugung eines Parallelstrahlenbündels 4 zusammengefasst. Hierbei kann es sich beispielsweise um einen Laser mit nachgeordneter Strahlenaufweitungsoptik oder um eine intensive Punktlichtquelle mit nachgeschalteter Sammeloptik handeln. Im Parallelstrahlenbündel 4 ist in einer vorgegebenen Entfernung zur mechanischen Einheit 3 eine Mattscheibe 5 angeordnet, auf der der Schattenriß eines zeichnerisch nicht dargestellten, sich zwischen Lichtquelle 1 bzw. Optik 2 und Mattscheibe 5 befindlichen Gegenstandes abgebildet wird. Der Schattenriß wird von einer elektronischen Kamera 6 ausgemessen, beispielsweise durch Abrasterung des Schattenrisses mit einer digital gesteuerten Videokamera. Die pro Kamerabild ausgewertete Fläche kann ca. 60 x 60 mm betragen. Diese Bildfläche wird in 256 x 256 Bildpunkte aufgelöst.

Gemäß dem erfindungsgemäßen Verfahren ist vorgesehen, daß ein Schattenriß eines Teiles des untersuchten Gegenstandes auf der Mattscheibe 5 durch das Parallelstrahlenbündel 4 erzeugt wird, daß der gesamte Gegenstand durch eine Aneinanderreihung von Schattenrissen abgetastet wird, und

- 4 -

daß jeder Schattenriß von der elektronischen Kamera 6 ausgemessen wird. Hierbei sind die Schattenrisse zweckmäßigerweise kleiner als die Querschnittsfläche des Parallelstrahlenbündels 4. Auch ist vorgesehen, daß zur fehlerfreien Ermittlung der Konturlinien des Gegenstandes die Kamerabilder sich teilweise überlappen.

Der zu messende Gegenstand wird zeilenweise und lückenlos mit den Meßbildflächen abgetastet. Dabei können zur Zeitersparnis eine Innenkontur, innerhalb der nur Schatten auftritt, und eine Außenkontur, die mit Sicherheit größer als der Schattenriß ist, vorprogrammiert werden, so daß nur die Fläche zwischen diesen Konturen ausgetastet werden muß.

Die Flächenbestimmung wird jeweils für ein Kamerabild durchgeführt. Dabei werden einfach die dunklen Bildpunkte in einem Zähler gezählt und beim Bildwechsel als 16 - Bit - Wort an die Steuer- und Auswerteeinheit übergeben.

Die Koordination des Übergangs/Hell-Dunkel werden für jede Kamerazeile ermittelt und zusammen mit der Zeilen-Nummer an die Auswerteeinheit übergeben. Die Auswerteeinheit errechnet daraus absolute Koordination. Hierzu sei in der Ebene quer zur Fahrzeug-Längsachse ein kartesisches Koordinatensystem aufgespannt. Die X-Achse sei horizontal, die Y-Achse vertikal orientiert.

Die Koordinaten eines einzelnen Bildpunktes sind $X = X_0 + \Delta X$, dabei ist $X_0$ die Startkoordinate der Kamerazeile = Grundkoordinate des Nachführsystems und $\Delta X$ = die Nummer der Bildspalte, $Y = Y_0 + \Delta Y$, dabei ist $Y_0$ die Y-Koordinate des Nachführsystems und $\Delta Y$ die Nummer der Bildzeile. Die ermittelten Absolutkoordinaten der Schattenkontur werden in der Auswerteeinheit zwischengespeichert und können auf einer Aufzeichnungseinrichtung aufgezeichnet werden.

Um die geforderte Meßgeschwindigkeit einhalten zu können, kann es notwendig werden, daß die Kamera 6 auch während der Bildauswertung kontinuierlich bewegt wird. Die Kamera ist mit der Nachführeinheit so synchronisiert, daß eine Bildaustastung immer dann gestartet wird, wenn sich die Nachführung um eine Bildbreite in X-Richtung bewegt hat.

Für eine manuelle Auswertung kann in der Beobachtungsebene eine Plexiglasscheibe eingebaut werden, auf die ein Transparentpapier aufgespannt wird. Die Kamera 6 wird auf eine Position außerhalb der auswertbaren Fläche gefahren. Dann wird die Lichtquelle 1 über eine Fernsteuerung der Kontur des Gegenstandes so entlang geführt, daß die Kontur auf das Transparentpapier aufgezeichnet werden kann.

Eine Anlage zur Durchführung des erfindungsgemäßen Verfahrens kann im wesentlichen aus zwei portalähnlichen Stahlrahmenkonstruktionen bestehen. An diesen Rahmenkonstruktionen können horizontal-orientierte Brücken in vertikaler Richtung auf und abbewegt werden. Auf den Brücken werden die Beleuchtungseinrichtung 1 bis 3 und die Kamera 6 horizontal bewegt. Die Rahmenkonstruktionen werden mit Flanschen an Ankern montiert, die im Hallenboden einbetoniert sind. Dabei sind jeweils auf der einen Seite Festlager, auf der anderen Seite Gleitlager vorgesehen.

Als Führungen sind Präzisionsschlitten vorgesehen. Der Antrieb erfolgt über Schrittmotor und Trapezgewindespindeln. Die Lagemeldung erfolgt für die Lichtquelle 1 über elektronische Schrittzähler.

Licentia Patent-Verwaltungs-GmbH      Z13PTL-HH/Sl/mar
Theodor-Stern-Kai 1      HH 80/37
D-6000 Frankfurt/Main 70

PATENTANSPRÜCHE

1. Verfahren zum Messen des Flächeninhaltes der Projektion eines durch eine unregelmässige Umrißlinie begrenzten undurchsichtigen dreidimensionalen Gegenstandes auf eine Ebene unter Verwendung einer Lichtquelle (1) zum Beleuchten des Gegenstandes zwecks seiner Unterscheidung von seinem Hintergrund und eines Detektors, der den Gegenstand und seinen Hintergrund zeilenweise abtastet und das zu ihm gelangende Licht in ein elektrisches Signal umwandelt, dadurch gekennzeichnet, daß ein Schattenriß eines Teiles des untersuchten Gegenstandes auf einer Mattscheibe (5) durch ein Parallelstrahlenbündel (4) erzeugt wird, daß der gesamte Gegenstand durch eine Aneinanderreihung von Schattenrissen abgetastet wird, und daß jeder Schattenriß von einer elektronischen Kamera (6) ausgemessen wird.

2. Verfahren nach Anspruch 1, dadurch gekennzeichnet, daß die Schattenrisse kleiner sind als die Querschnittsfläche des Parallelstrahlenbündels.

3. Verfahren nach Anspruch 1 oder 2, dadurch gekennzeichnet, daß zur fehlerfreien Ermittlung der Konturlinien des Gegenstandes die Kamerabilder sich teilweise überlappen.

4. Verfahren nach Anspruch 1, 2 oder 3, dadurch gekennzeichnet, daß eine Innenkontur des Schattenrisses, innerhalb der nur Schatten auftritt, und eine Außenkontur, die mit Sicherheit größer als der Schattenriß ist, vorprogrammiert werden, und daß nur die Fläche zwischen diesen Konturen ausgetastet wird.

5. Verfahren nach Anspruch 1, 2, 3 oder 4, dadurch gekennzeichnet, daß zur Flächenbestimmung eines Schattenrisses die dunklen Bildpunkte des zugehörenden Kamerabildes in einer Zähleinrichtung gezählt werden, und daß bei einem Bildwechsel die gezählten Bildpunkte als 16 - Bit - Wort an eine Steuer- und Auswerteeinrichtung übergeben werden.

6. Verfahren nach Anspruch 5, dadurch gekennzeichnet, daß die Koordinatenwerte eines Hell-Dunkel-Überganges für jede Kamerazeile ermittelt werden, und daß die ermittelten Koordinatenwerte zusammen mit der Zeilennummer an die Auswerteeinrichtung übermittelt werden, die die absoluten Koordinatenwerte der Schattenkontur des Gegenstandes errechnet.

7. Verfahren nach Anspruch 6, dadurch gekennzeichnet, daß die absoluten Koordinatenwerte in der Auswerteeinrichtung zwischengespeichert und auf einer nachgeordneten Aufzeichnungseinrichtung aufgezeichnet werden.

8. Verfahren nach Anspruch 1, gekennzeichnet durch eine kontinuierlich bewegte Kamera während einer Bildauswertung.

9. Verfahren nach einem der vorherstehenden Ansprüche, dadurch gekennzeichnet, daß das Parallelstrahlenbündel durch einen Laser mit nachgeordneter Strahlenaufweitungsoptik erzeugt wird.

10. Verfahren nach einem der Ansprüche 1 bis 9, gekennzeichnet durch die Verwendung einer intensiven Punktlichtquelle mit nachgeschalteter Sammeloptik.

11. Verfahren nach einem der Ansprüche 1 bis 10, dadurch gekennzeichnet, daß zur manuellen Auswertung in der Beobachtungsebene eine Plexiglasscheibe vorgesehen wird, auf die ein Transparentpapier aufgespannt wird, daß die Kamera auf eine Position außerhalb der auswertbaren Fläche gefahren wird, und daß das Parallelstrahlenbündel der Kontur des Gegenstandes so entlang geführt wird, daß die Kontur auf das Transparentpapier aufgezeichnet wird.

12. Verfahren nach Anspruch 11, gekennzeichnet durch eine ferngesteuerte Einrichtung zur Erzeugung des Parallel- strahlenbündels.

0049875

1

1    2    3         4    5         6